Europäisches Patentamt

European Patent Office

Office européen des brevets

(19)

(11) Veröffentlichungsnummer : **0 037 872**
**B1**

# EUROPÄISCHE PATENTSCHRIFT

(12)

(45) Veröffentlichungstag der Patentschrift :
**11.04.84**

(51) Int. Cl.³ : **B 62 M 17/00**

(21) Anmeldenummer : **80890042.7**

(22) Anmeldetag : **11.04.80**

(54) **Kardanantrieb für Motorräder.**

(73) Patentinhaber : **Leitner, Horst**
**Dr.-Th.-Körner-Strasse 33**
**A-8600 Bruck a.d. Mur Steiermark (AT)**

(72) Erfinder : **Leitner, Horst**
**Dr.-Th.-Körner-Strasse 33**
**A-8600 Bruck a.d. Mur Steiermark (AT)**

(74) Vertreter : **Beer, Otto, Dipl.-Ing. et al**
**Lindengasse 8**
**A-1071 Wien (AT)**

(43) Veröffentlichungstag der Anmeldung :
**21.10.81 Patentblatt 81/42**

(45) Bekanntmachung des Hinweises auf die Patenterteilung : **11.04.84 Patentblatt 84/15**

(84) Benannte Vertragsstaaten :
**DE FR GB IT NL**

(56) Entgegenhaltungen :
EP-A- 0 014 416
AT-B- 177 074
DE-B- 1 041 379
DE-B- 1 055 981
DE-B- 1 071 518
DE-C- 707 199
DE-C- 805 119
FR-A- 507 495
FR-A- 509 852
FR-A- 847 807
FR-A- 1 036 316
GB-A- 710 098
GB-A- 752 035
US-A- 2 077 628
**Die Akte enthält technische Angaben, die nach dem Eingang der Anmeldung eingereicht wurden und die nicht in dieser Patentschrift enthalten sind.**

## Kardanantrieb für Motorräder

Die Erfindung betrifft einen Kardanantrieb für schwingarmgelagerte Hinterräder von Motorrädern, bei dem Gehäuse, in dem das mit der Kardanwelle verbundene Ritzel gelagert und das mit dem Hinterrad verbundene Tellerrad aufgenommen ist, gegenüber dem Schwingarm verdrehbar gelagert und durch einen mit dem Gehäuse starr verbundenen Arm über einen Lenker am Rahmen abgestützt ist.

Bei den bekannten Kardanantrieben ist das Gehäuse, in dem das mit der Kardanwelle verbundene Ritzel gelagert ist und in dem auch das mit dem Hinterrad verbundene Tellerrad, in welches das Ritzel eingreift, aufgenommen ist, mit der Hinterradschwinge starr verbunden. Durch diese starre Verbindung, die entweder dadurch erreicht wird, daß das Gehäuse an der Schwinge abgestützt ist oder mit der Schwinge einen fest verbundenen Bauteil bildet — im letzteren Fall wird die Kardanwelle selbst im hohl ausgebildeten Schwingenarm aufgenommen —, wirken auf die Schwinge, insbesondere beim Beschleunigen, Momente ein, die je nach Drehrichtung das Kardanantriebes zu einem Einfedern bzw. Aufstellen der Hinterradfederung des Motorrades führen. Beides beeinflußt die Straßenlage, insbesondere bei Kurvenfahrt, nachteilig.

In der DE-B-1 055 981 sind Kardanantriebe der eingangs genannten Gattung gezeigt, mit welchen das Problem einer bei Kardanantrieben reaktionskräftefreien Federung der Hinterradschwinge gelöst werden soll. Ein Nachteil der bekannten Lösungsvorschläge liegt darin, daß die Abstützung stets unterhalb der Hinterradschwinge erfolgt. Dies ist insoferne nachteilig, als wegen der nötigen Bodenfreiheit nur kurze Hebelarme (Abstand zwischen dem Angriffspunkt der Abstützung am Gehäuse und der Hinterradachse einerseits und Abstand zwischen dem Schwingenlager und dem Angriffspunkt der Abstützung am Motorradrahmen anderseits) möglich sind, so daß sich insgesamt ungünstige Verhältnisse ergeben. Dennoch besteht die Gefahr, daß die Abstützung, z. B. bei Fahrten in schwierigem Gelände, verbogen oder sonstwie beschädigt wird.

Der Erfindung liegt die Aufgabe zugrunde, einen Kardanantrieb für schwingarmgelagerte Hinterräder von Motorrädern zu schaffen, welcher die vorerwähnten Nachteile nicht aufweist.

Erfindungsgemäß wird dies dadurch erreicht, daß der Lenker an einem oberhalb des Schwingarmes liegenden Punkt des Rahmens angelenkt ist.

Dadurch, daß die erfindungsgemäße Abstützung oberhalb des Schwingarmes am Rahmen angelenkt ist, können die Hebelarme größer als bei den bekannten Abstützungen sein, so daß die resultierenden Kräfte kleiner sind und die Abstützung insgesamt schwächer, d. h. leichter, ausgebildet werden kann. Darüber hinaus ist die Gefahr von Beschädigungen ausgeschaltet.

In einer Ausführungsform kann vorgesehen sein, daß Lenker und Arm zusammen als eine längenveränderbare Teleskopanordnung ausgebildet sind. In diesem Fall erweist es sich als günstig, wenn die aus Lenker und Arm gebildete Teleskopanordnung zusätzlich als Federbein und/oder Stoßdämpfer für die Hinterradschwinge ausgebildet ist.

Weitere Einzelheiten der Erfindung werden an Hand der in der Zeichnung wiedergegebenen Ausführungsbeispiele erläutert. Es zeigt

Figur 1 den erfindungsgemäßen Kardanantrieb in Draufsicht und die

Figuren 2 und 3 zwei Varianten der Abstützung des Gehäuses am Rahmen des Motorrades.

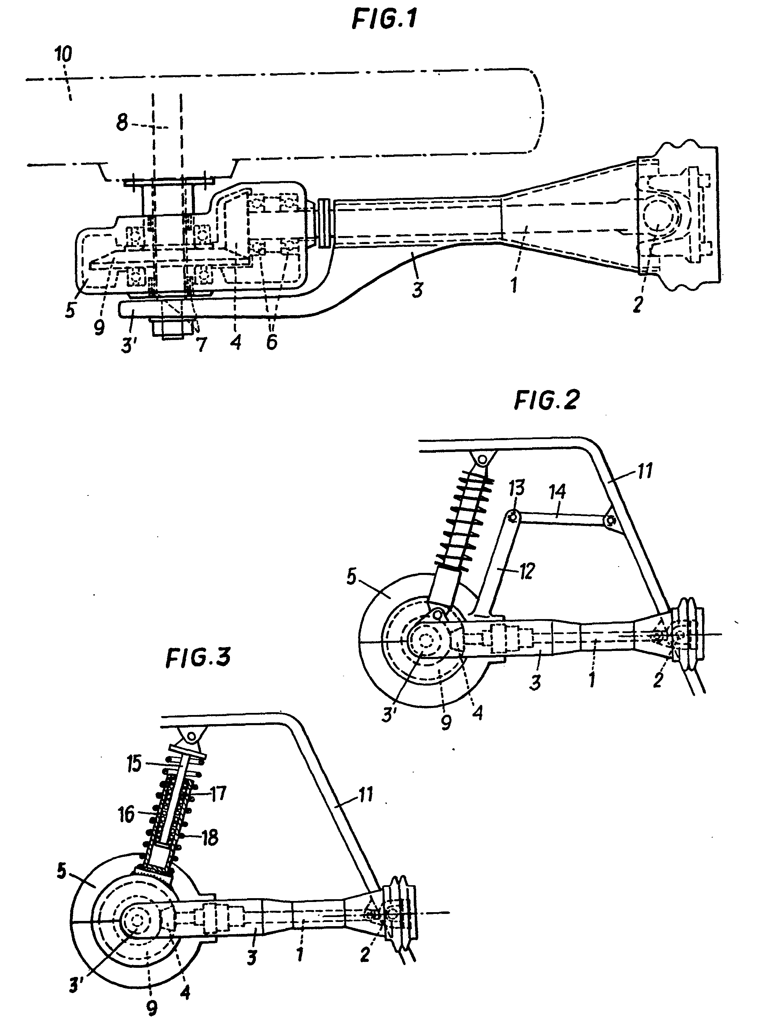

Der in Fig. 1 gezeigte Antrieb umfaßt eine Kardanwelle 1, die über ein Kardangelenk 2 auf nicht näher gezeigte Weise mit einem Getriebe des Motorrades verbunden ist. Die Kardanwelle 1 ist in einem hohl ausgebildeten Schwingarm 3 aufgenommen und ist über ein Kupplungsstück mit dem ein Ritzel 4 tragenden Ende der Welle, das in einem Gehäuse 5 über Kugellager 6 gelagert ist, verbunden. Das Kupplungsstück gestattet es, daß die Kardanwelle 1 im Winkel zu dem das Ritzel 4 tragenden Ende verläuft. Anstelle des Kupperlstückes kann auch ein zweites Kardangelenk vorgesehen sein. Das Gehäuse 5 ist gegenüber dem seitlich an ihm vorbeigeführten Ende 3' des Schwingarmes 3 frei beweglich, beispielsweise über Nadellager oder Lagerbuchsen 7 auf der Hinterachse 8 des Motorrades gelagert. Im Gehäuse 5 ist weiters ein Tellerrad 9 aufgenommen, das mit dem strichliert angedeuteten Hinterrad 10 verbunden ist.

Bei der in Fig. 2 gezeigten Ausführungsform der Abstützung des Gehäuses 5 am Rahmen 11 ist mit dem Gehäuse 5 ein Arm 12 starr verbunden, dessen freies Ende 13 über einen Lenker 14 am Rahmen 11 angelenkt ist. Durch den Arm 12 werden alle auf das Gehäuse 5 einwirkenden, aus den Antriebskräften oder den beim Motorbremsen entstehenden kräften herrührenden Momente vom Rahmen 11 aufgefangen, so daß auf die Schwinge 3 selbst keine vom Antrieb herrührenden Kräfte mehr einwirken.

Fig. 3 zeigt in einer der Fig. 2 analogen Darstellung eine weitere Möglichkeit der Abstützung des Gehäuses 5 am Rahmen 11. In diesem Fall greift der am Rahmen 11 angelenkte Lenker 15 in den als Teleskoprohr ausgebildeten Arm 16 gleitend ein. Diese Ausführungsform bietet die Möglichkeit, die Drehmomentabstützung für das Gehäuse 5, wie gezeigt, mit der Federung 18 und/oder der Stoßdämpfung für die Hinterradschwinge 3 zu kombinieren. Um die Reibungskräfte zwischen Arm 16 und Lenker 15 zu verringern, können zwischen den genannten Bauteilen Rollkörper 17 vorgesehen sein.

Anstelle des in Fig. 3 gezeigten Teleskoprohres 15, 16 kann auch eine andere teleskopartig längenveränderbare Strebe vorgesehen sein. Ebenso kann der Lenker 15 als Rohr und der Arm 16 als in diesem verschiebbare Strebe ausgebildet sein.

Der Arm 16, ganz gleich, ob er als Rohr oder als Strebe ausgebildet ist, kann mit dem Gehäuse 5 verschweißt, durch Schrauben verbunden oder auch einstückig ausgebildet sein.

## Ansprüche

1. Kardanantrieb für schwingarmgelagerte Hinterräder von Motorrädern, bei dem das Gehäuse (5), in dem das mit der Kardanwelle (1) verbundene Ritzel (4) gelagert und das mit dem Hinterrad (10) verbundene Tellerrad (9) aufgenommen ist, gegenüber dem Schwingarm (3) verdrehbar gelagert und durch einen mit dem Gehäuse starr verbundenen Arm (12, 16) über einen Lenker (14, 15) am Rahmen (11) abgestüzt ist, dadurch gekennzeichnet, daß der Lenker (14, 15) an einem oberhalb des Schwingarmes (3) liegenden Punkt des Rahmens (11) angelenkt ist.

2. Kardanantrieb nach Anspruch 1, dadurch gekennzeichnet, daß Lenker (15) und Arm (16) zusammen als eine längenveränderbare Teleskopanordnung ausgebildet sind.

3. Kardanantrieb nach Anspruch 2, dadurch gekennzeichnet, daß die aus Lenker (15) und Arm (16) gebildete Teleskopanordnung zusätzlich als Federbein und/oder Stoßdämpfer für die Hinterradschwinge (3) ausgebildet ist.

## Claims

1. Cardan drive for motorcycle rear wheels supported by a swing arm, in which the housing (5), in which the pinion (4) connected with the cardan shaft (1) is supported and in which the ring gear (9) connected with the rear wheel (10) is contained, is supported pivotally with respect to the swing arm (3) and connected via an arm (12, 16) being rigidly connected to the housing by means of a guide member (14, 15) to the frame (11), characterized in that the guide member (14, 15) is pivoted to a point of the frame (11) disposed above the swing arm (3).

2. Cardan drive according to claim 1, characterized in that the guide member (15) and the arm (16) are cooperatively formed as a telescopic system of variable length.

3. Cardan drive according to claim 2, characterized in that the telescopic system formed by guide member (15) and arm (16) additionally is designed as spring suspension and/or shock absorber for the swing arm (13) of the rear wheel.

## Revendications

1. Transmission à cardan pour la roue arrière montée sur un bras oscillant de motocyclette, dans laquelle le carter (5), où est logé le pignon d'attaque (4) réuni à l'arbre à cardan (1) et où est disposée la couronne dentée (9) liée à la roue arrière (10), est monté libre en rotation par rapport au bras oscillant (3) et s'appuie contre le cadre (11), par l'intermédiaire d'une tige oscillante (14, 15), par un bras (12, 16) lié rigidement à ce carter, caractérisée en ce que la tige oscillante (14, 15) est articulée en un point du cadre (11) placé au-dessus du bras oscillant (3).

2. Transmission à cardan selon la revendication 1, caractérisée en ce que la tige oscillante (15) et le bras (16) sont réalisés pour constituer un ensemble télescopique de longueur variable.

3. Transmission à cardan selon la revendication 2, caractérisée en ce que l'ensemble télescopique composé de la tige oscillante (15) et du bras (16) est réalisé en plus comme une tige à ressort et/ou un organe amortisseur pour le bras oscillant (3) de la roue arrière.

0 037 872

FIG.1

FIG.2

FIG.3